# NEUE EUROPÄISCHE PATENTSCHRIFT

(11) **EP 0 462 500 B2**
(45) Veröffentlichungstag und Bekanntmachung des Hinweises auf die Entscheidung über den Einspruch: **06.09.1995**
(45) Hinweis auf die Patenterteilung: 09.06.1993
(21) Anmeldenummer: 91109642.8
(22) Anmeldetag: 12.06.1991
(51) Int. Cl.: B65G 65/48, B65G 53/46

(54) **Gehäuse für eine Zellenradschleuse**
Housing for a rotary valve
Carter pour un sas à roue cellulaire

(30) Priorität: 20.06.1990 DE 4019627
(43) Veröffentlichungstag der Anmeldung: 27.12.1991
(73) Patentinhaber: MOTAN VERFAHRENSTECHNIK GMBH & CO., D-88250 Weingarten (DE)
(72) Erfinder: Waeschle,,Franz,Josef,, DE-7987 Weingarten (DE)
(74) Vertreter: Riebling, Peter, Dr.-Ing.

(56) Entgegenhaltungen:
- DE-A- 3 772 913
- GB-A- 1 161 204

## Beschreibung

Die Erfindung betrifft ein Gehäuse für eine Zellenradschleuse mit einem einen Einlaufschacht, eine Bohrung zur Aufnahme des Zellenrades und einen Auslaufschacht umfassenden Gehäusekörper und zwei die Bohrung stirnseitig verschließenden Lagerdeckeln, wobei in die Bohrung eine austauschbare zylindrische Büchse mit Durchbrechnungen in Höhe des Einlauf- und des Auslaufschachtes eingesetzt ist, die als Verschleißbüchse ausgebildet ist und aus mehreren zueinander symmetrischen Teilen besteht. Eine Schleuse dieser Gattung ist aus DE-A- 3722913 bekannt.

Die Austauschbare Büchsen ermöglichen es, dasselbe Schleusengehäuse für die unterschiedlichsten Einsatzzwecke hinsichtlich der Art der zu fördernden oder zu dosierenden Schüttgüter einzusetzen. Beispielsweise kann die Büchse aus Kunststoff bestehen, wenn das betreffende Schüttgut nicht mit Metall in Berührung kommen darf. Hingegen werden Bronzebüchsen eingeselzt, wenn die Bildung eines Reibungsfunkens zwischen den Zellenradstegen und der Gehäusewand unbedingt vermieden werden muß.

Von besonderer Bedeutung sind jedoch Büchsen aus sehr verschleißarmen Werkstoffen, wenn die Schleuse abrasiv wirkendes Schüttgut fördern soll, denn eine Zellenradschleuse büßt ihre Funktionsfähigkeit schon dann weitgehend ein, wenn der Spalt zwischen den Stirnkanten der Zellenradstege und der Wand der Bohrung des Schleusengehäuses infolge Verschleiß nur um wenige zehntel Millimeter zunimmt, denn abhängig von der Druckdifferenz zwischen dem Schleuseneinlauf und dem Schleusenauslauf bildet sich in dem Spalt eine Leckluftströmung hoher Geschwindigkeit aus, wodurch wiederum der durch mitgeführte Schüttgutpartikel verursachte Verschleiß progressiv anwächst.

Für entsprechende Einsatzfälle sind bereits Schleusen auf dem Markt, in deren Bohrungen eine aus Keramik bestehende Büchse eingepasst ist. Auch wird in der DE-A- 37 22 913 eine technische Lösung beschrieben, in der zwei Schalen aus hartem Material mit Hilfe von zwei Halteringen in das Schleusengehäuse eingespannt werden. Damit wird zwar das Problem der Durchbrechungen der Büchse im Bereich der Ein- und Auslauföffnung gelöst sowie eine einfache Austauschaktion ermöglicht, doch erfordert die Herstelltechnik der Schalen, der Verzug beim Brennen bzw. Härten, eine Nachbearbeitung der Innenbohrung nach Einbau ins Schleusengehäuse mit Hilfe einer Diamantschleifscheibe, um den Originalpassungsdurchmesser des geschützten Gehäuses für das sich darin drehende Zellenrad herzustellen.

Je nach Verzug wurden erhebliche Schleifzeiten benötigt.

Ziel dieser Maßnahmen ist, Leckströmungen von der Auslaufseite in Richtung zur Einlaufseite über das Zellenrad hinweg zu minimieren. Damit soll der Verschleißangriff und die Spaltströmungen herabgesetzt werden.

Nachteilig bei dem Gegenstand der DE-A- 37 22 913 ist im übrigen, daß mit einem relativ großen Spiel zwischen dem Zellenrad und der Gehäusebohrung gearbeitet werden muß. Ein derartiges relativ großes Spiel ist konstruktiv bedingt. Durch die Druckdifferenz zwischen der Einlaufseite und der Auslaufseite am Zellenradgehäuse ergibt sich nämlich eine Durchbiegung der Welle des Zellenredes, die vom Spiel aufgefangen werden muß. Aus konstruktiven Gründen muß also ein relativ großes Spiel vorgesehen werden, um eben ein Auflaufen des Zellenrades auf entsprechende Flächen des Zellenradgehäuses zu vermeiden.

Durch dieses relativ große, konstruktiv bedingte Spiel strömten bekannter Weise große Leckströme, die mit einzelnen Schüttgutpartikel beladen waren und auf der aufwärts drehenden Seite des Zellenrades an der Gehäusebohrung die dort angebracht Panzerschicht abgetragen hatten.

Der vorliegenden Erfindung liegt die Aufgabe zugrunde, ein Schleusengehäuse der eingangs genannten Art zu schaffen, bei dem bei besseren Verschleißeigenschaften die Leckströme wesentlich minimiert sind.

Zur Lösung der gestellten Aufgabe ist ein Gehäuse nach der Erfindung dadurch gekennzeichnet, daß die Verschleißbuchse aus zwei einteiligen Bauteilen besteht, die spiegelsymmetrisch zu einer Mittelquerebene durch die vertikale Schleusenmittelachse sind und einen außerhalb der Durchbrechungen liegenden, geschlossenen Außenumfang aufweisen, und daß die Verschleißbuchse an ihrem so entstehenden Außenumfang mindestens teilweise von einem elastomeren Kunststoffkörper umgeben ist, der als Elastomerflansch oder als Elastomermantel ausgebildet ist, welcher die Verschleißbuchse gegenüber der Gehäuseschale schwimmend abstützt.

Die vorliegende Erfindung unterscheidet sich also vom Gegenstand der DE-A- 37 22 913 dadurch, daß bei dieser Druckschrift eine Verschleißbuchse aus zwei Schalenteilen gebildet war, welche schwierig herzustellen waren. Es musste daher mit einem Härteverzug gerechnet werden, wodurch wieder relativ große Lackströme in Kauf genommen werden mussten.

Zwar ist in dieser Druckschrift angegeben, daß die Zylinderschalen über eine Kunststoffschicht mit der Gehäuseschale verklebt sind; dies war jedoch aus rein fertigungstechnischen Gründen ausgeführt, um die Bearbeitung des Außenmantels dieser Schalenhälften von hartem Material auf die weiche Kunststoffschicht zu verlagern. Die hier genannte Kunststoffschicht diente jedoch nicht der schwimmenden Lagerung dieser Verschleißbuchse.

Hier setzt die Erfindung ein.

Durch Ausbildung von zwei gleichartigen Verschleißbuchsenhälften, die symmetrisch zu einer Mittelquerebene durch die vertikale Schleusenmittelachse sind, ist es nun möglich, jede hälftige Verschleissbuchse für sich allein zu bearbeiten, ohne daß die Gefahr eines Härteverzuges besteht.

Bei der DE-A- 37 22 913 mussten die Halbschalen über die gesamte Länge des Schleusenradgehäuses bearbeitet werden, was bei der vorliegenden Erfindung entfällt. Bei der vorliegenden Erfindung muß jeweils nur eine hälftige Verschleißbuchse bearbeitet werden, d.h. also jede Verschleißbuchse erstreckt sich jeweils nur über die Hälfte der Gehäuselänge.

Dadurch, daß die Verschleißbuchse aus im wesentlichen zwei seitlichen Büchsenmänteln besteht, wobei beide Büchsenmäntel ein rotationssysmmetrisches Teil bilden und dieses rotationssymmetrische Teil wiederum werkstoffeinstückig mit einem Ringflansch mit einem geschlossenen Außenumfang verbunden ist, ergibt sich eine ausgezeichnete Formstabilität dieses Teils, so daß ein Verzug dieses Teils beim Härten oder beim Einbauen minimiert wird. Damit ist die Verschleißfestigkeit des erfindungsgemässen Zellenradgehäuses wesentlich gegenüber dem Stand der Technik verbessert.

Ein weiteres Merkmal der vorliegenden Erfindung besteht darin, daß die erfindungsgemässen Verschleißbuchsen, die in ihrer Berührungsfläche formschlüssig über entsprechende Verbindungsmittel zusammengefügt werden, schwimmend im Gehäuse gelagert sind.

Eine derartige schwimmende Lagerung hat wesentliche Vorteile gegenüber dem Stand der Technik.

Lagert man nämlich eine derartige Verschleißbuchse schwimmend, dann bewegt sie sich bei einer Durchbiegung des Zellenrades aufgrund einer beherrschenden Druckdifferenz mit nach oben und das Engspiel, welches die Leckströmung bestimmt zwischen Zellenrad und Verschleißbuchse, bleibt stets konstant unabhängig von dem Verformungsspiel des Zellenrades und der dazugehörenden Welle.

Hier liegt also der wesentliche Vorteil der vorliegenden Erfindung, daß aufgrund der schwimmenden Lagerung der Verschleißbuchse ein stets gleichbleibendes definiertes Spiel zwischen dem Zellenrad und den zugeordneten Innenwandungen der Verschleißbuchse eingehalten werden kann.

Evtl. vorhandene Spieldifferenzen, die sich aufgrund unterschiedlicher Temperaturen zwischen dem Zellenrad und der Verschleißbuchse ergeben, werden durch das gegebene, fest eingestellte Minimalspiel beherrscht.

Um die hälftig geteilten Verschleißbuchsen in das Gehäuse einzubauen,, besteht das Gehäuse bevorzugt aus zwei zueinander symmetrischen Gehäuseschalen, wobei die Trennfuge auf horizontaler Ebene verläuft. Auf diese Weise kann die Verschleißbuchse mit ihren beiden Verschleißbuchsenteilen sehr einfach in die Gehäuseschale eingesetzt werden.

Für die schwimmende Lagerung der Verschleißbuchse (welche aus zwei symmetrischen Teilen besteht) gibt es nun mehrere Möglichkeiten:

In einer ersten Ausführungsform der vorliegenden Erfindung ist es vorgesehen, daß vollumfänglich die Verschleißbuchse von einem elastomeren Kunststoffmantel umgeben ist.

Die Dicke dieses Kunststoffmantels muß so dick sein, daß ein genügendes Bewegungsspiel der Verschleißbuchse in der Bohrung der Gehäuseschalen gewährleistet ist.

In der Regel wird man etwa eine Dicke von 3 - 8 mm wählen, um ein Durchbiegungsspiel des Zellenrades von etwa 2 bis 3/10 mm aufzufangen.

Ein derartig vollumfänglich, die Verschleißbuchse umfassender Isoliermantel hat noch den weiteren Vorteil, daß er eine ausgezeichnete Temperaturisolation darstellt. Hierdurch wird gewährleistet, daß die Verschleißbuchse und das in der Verschleißbuchse laufende Zellenrad stets auf gleicher Temperatur sind. Das Temperaturspiel dieser beiden Teile ist damit stets gleichartig und gleichgerichtet. Eine Abkühlung über die äußeren Gehäuseschalen wird damit vermieden. Deshalb ist es weiterhin möglich, das vorher beschriebene Minimalspiel zwischen dem Zellenrad und den zugeordneten Innenwandungen der Verschleißbuchse noch weiter zu verkleinern, um damit den Leckstrom noch weiter herabzusetzen.

In einer anderen Ausführungsform der vorliegenden Erfindung ist es vorgesehen, daß nicht ein vollumfänglicher Zylindermantel für die schwimmende Lagerung der Verschleißbuchse in der Gehäuseschale vorgesehen ist, sondern daß dieser Mantel nur an einigen Flächen als Flansch vorhanden ist Es genügt dann die Verschleißbuchse an einigen Stützflächen schwimmend gegenüber der Gehäuseschale zu lagern.

Eine derartige "streifenförmige" Lagerung der Verschleißbuchse in den Gehäuseschalen des Gehäuses wird dann bevorzugt, wenn die Prozeßtemperaturen einen vollen Isoliermantel nicht mehr gestatten. Stattdessen kann dann eine hochtemperaturfeste, ggf. mit Metall ummantelte Dichtung verwendet werden. Bei dieser Dichtung ist nur entscheidend, daß sie das vorher geforderte Bewegungsspiel der Verschleißbuchse zulässt.

Hierbei bildet sich dann ein Hohlraum (außerhalb dieses Dichtungsstreifens) zwischen dem Außenumfang der Verschleißbuchse und dem Innenumfang der Gehäuseschale. Dieser Hohlraum wirkt als Isolierlufthülle.

Die Erfindung wird nun anhand von mehreren Ausführungsbeispielen näher beschrieben.
Hierbei ergeben sich aus der Zeichnung und ihrer Beschreibung weitere Vorteile der Erfindung.

Es zeigen:
- Figur 1: schematisiert gezeichneterTeilschnitt durch die linke, obere Hälfte einer Zellenradschleuse nach der Erfindung,
- Figur 2: ein um 90° gedrehter Schnitt durch eine Zellenradschleuse,
- Figur 3: perspektivische Ansicht eines Teils der Verschleißbuchse,
- Figur 4: schematisiert ein Teilschnitt vergrößert in der Art nach Figur 2 mit einer anderen Ausführungsform des Elastomer-Flansches,
- Figur 5: eine Vorderansicht des Metallmantels, welcher zur stirnseitigen Abschirmung des Elastomer-Flansches verwendet wird,
- Figur 5a: den Elastomer-Flansch im Detail,
- Figur 6: eine weitere Ausführungsform im Vergleich zu Figur 4 mit Darstellung eines Einsatzteiles.

Wegen der Funktion einer Zellenradschleuse und dem Aufbau der einzelnen Teile wird auf die Offenbarung der DE-A- 37 22 913 verwiesen, die vollinhaltlich von der vorliegenden Erfindung umfasst sein soll.

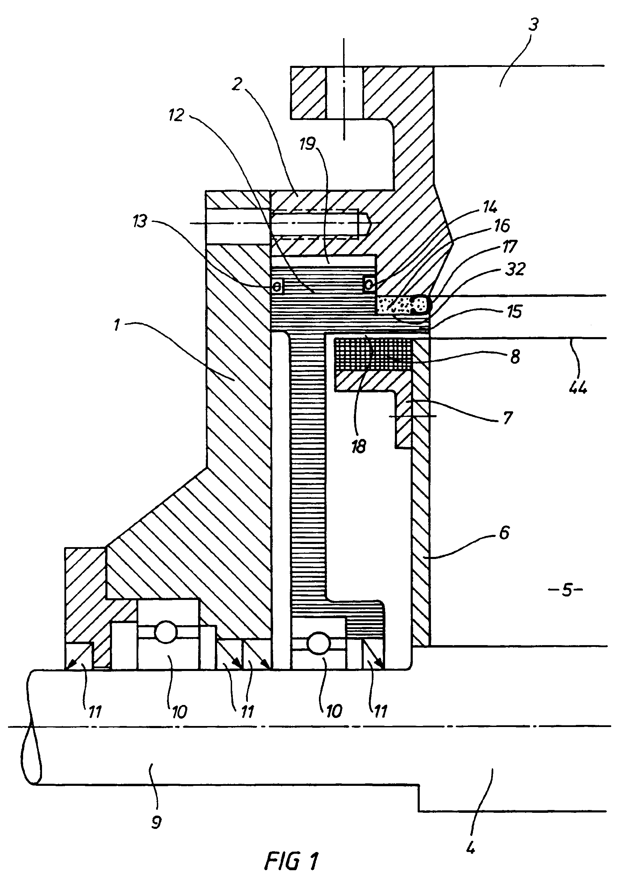

Gemäss der vorliegenden Erfindung besteht nach Figur 1 das Gehäuse aus einer oberen Gehäuseschale 2, die stirnseitig von einem Seitendeckel 1 abgeschlossen ist. Die Gehäuseschale 2 bildet einen oberen Einlauftrichter 3. Im Gehäuse ist eine Welle 4 drehbar gelagert über Lager 10 und zugeordneten Wellendichtringen 11. Die Welle 4 bildet im Bereich des Seitendeckels 1 einen Wellenstumpf 9, an dem die Teile 10,11 angeordnet sind.

Die Welle 4 ist drehfest mit einem Zellenrad 5 verbunden, wobei das Zellenrad 5 jeweils an den Stirnseiten eine Seitenscheibe 6 trägt, die ihrerseits fest axial auswärts mit einem Stützring 7 verbunden ist, der seinerseits radial auswärts mit einem Gleitring 8 verbunden ist.

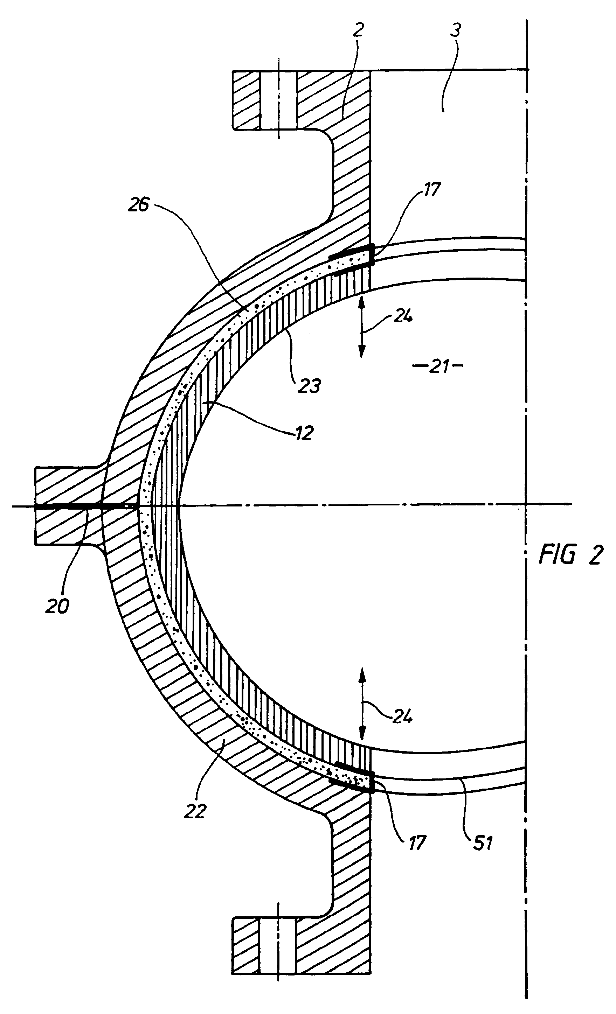

Die Abdichtung zwischen dem Zellenrad 5 und den zugeordneten Gehäuseschalen 2,22 (vergl. Figur 2) erfolgt erfindungsgemäss durch eine Verschleißbuchse 12, die fest in der Gehäuseschale 2 eingesetzt ist und dort über axial vordere und hintere O-Ringe 13,14 im Bereich einer Gehäusenut abgedichtet ist.

Die Verschleißbuchse 12 stützt sich über Lager 10 und Wellendichtringe 11 an der sich drehenden Welle 4 im Bereich des Wellenstumpfes 9 ab.

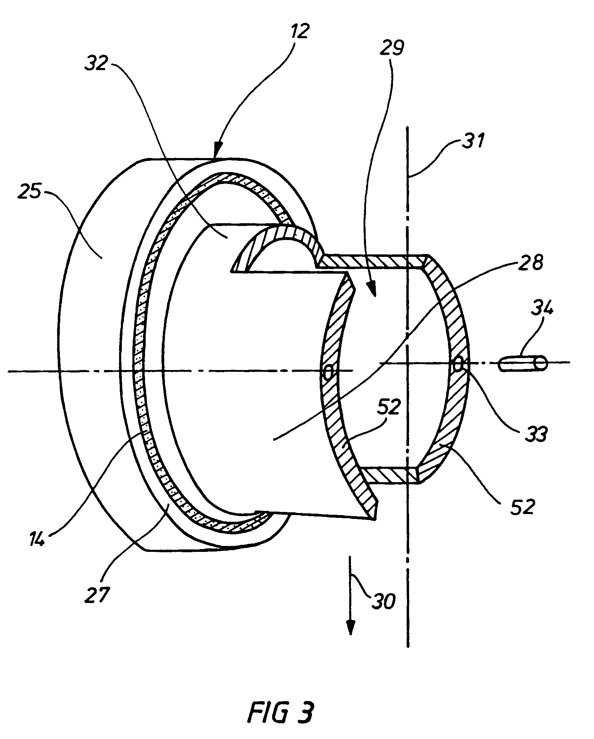

Gemäss Figur 1 und 3 besteht die Verschleißbuchse 12 aus einem zylindrischen umlaufenden Ringflansch 25, der an seiner äußeren Stirnfläche den O-Ring 13 und an seiner inneren Stirnfläche den O-Ring 14 trägt. Werkstoffeinstückig mit diesem Ringflansch 25 ist ein seitlicher Büchsenmantel 28 mit dem Ringflansch 25 verbunden, wobei der Büchsenmantel 28 aus einem kreiszylindrischen Teil besteht, welches entsprechende Einschnitte aufweist, um einen oberen Einlauf 29 und einen unteren Auslauf 30 zu bilden. Die Teile 29,30 befinden sich hierbei fluchtend im Bereich des Einlauftrichters 3 bzw. des Auslauftrichters 51.

Die Einschnitte für den Einlauf und den Auslauf 29,30 gehen jedoch nicht bis zu dem Ringflansch 25, sondern sie lassen in diesem Bereich eine Auflagefläche 32 frei, die - in später noch zu erläuternder Weise - die schwimmende Elastomerschicht trägt, welche die schwimmende Lagerung der Verschleißbuchse 12 in den Gehäuseschalen 2,22 bildet.

Die in Figur 3 dargestellte hälftige Verschleißbuchse 12 ist genau symmetrisch zu der vertikalen Scheusenmittelachse 31. Die beiden Teile werden im Bereich der Planfläche 52 aufeinandergestossen und formschlüssig miteinander verbunden. Eine derartige Formschlußverbindung ist beispielsweise in Figur 3 dargestellt. Hierbei sind in den Planflächen 52 Stecklöcher 33 angeordnet, in welche jeweils ein Verbindungszapfen 34 eingreift. Der Verbindungszapfen ragt aus der jeweiligen Planfläche 52 heraus und ragt in das gegenüberliegende Steckloch 33 der gegenüberliegenden, halbseitigen Verschleißbuchse 12 hinein, so daß die beiden Teile ein einheitliches, formschlüssig miteinander verbundenes Teil bilden.

Es liegt auf der Hand, daß eine derartige hälftige Verschleißbuchse 12 - wie sie in Figur 3 dargestellt ist - sehr leicht zu bearbeiten ist und während der Bearbeitung und der Härtung formstabil bleibt.

Die schwimmende Lagerung der Verschleißbuchse 12 zwischen den Gehäuseschalen 2,22 wird nun anhand der Figuren 1,2 näher beschrieben.

Hierbei ist erkennbar, daß auf der Auflagefläche 32 sich der Teil eines Elastomer-Mantels 26 erstreckt, über den sich die Verschleißbuchse 12 auf der Innenseite der Gehäusebohrung abstützt. Die Figur 2 zeigt, daß dieser Elastomer-Mantel 26 rund umläuft und nur im Bereich des Einlauftrichters 3 sowie des Auslauftrichters 51 ausgeschnitten ist. Im Prinzip hat also der Elastomer-Mantel genau die Formgebung, wie sie die seitlichen Büchsenmäntel 28 der Verschleilßbuchse 12 haben.

Wichtig ist, daß die Stirnseiten des Elastomer-Mantels, die in den Bereich des Einlauftrichters 3 und des Auslauftrichters 51 ragen, entsprechend armiert sind. Eine derartige Armierung kann beispielsweise über einen Metallmantel 17 mit Federstahlcharakteristik erfolgen, welcher Metallmantel in der Form eines Klammerteils die Stirnseiten einfasst, um diese vor unzulässigem Abrieb zu schützen.

Erfährt nun die Verschleißbuchse 12 ein entsprechendes Verstellspiel, beispielsweise in den Pfeilrichtungen 24, dann läuft die Verschleißbuchse gegen die elastomere Schwimmschicht des Elastomer-Mantels 26 auf und der Minimalabstand 18 (Figur 1) zwischen der Oberkante 44 des Zellenrades und der zugeordneten Innenwandung der Verschleißbuchse bleibt stets gleich. Der Gleitring 8, der aus einem verschleißarmen Material besteht, ist auswechselbar auf dem Stützring 7 angebracht, und zwar derart, daß man den Gleitring 8 auswechseln kann, ohne das Zellenrad 5 ausbauen zu müssen.

Die Oberfläche des Gleitringes 8 bildet also in Verbindung zu der gegenüberliegenden Innenwandung der Verschleißbuchse 12 die Gegenlaufflächen, welche die Leckströmung definieren. Der Abstand 18 zwischen den genannten Flächen kann somit stets gleichbleibend minimal gehalten werden, unabhängig davon, ob das Zellenrad selbst eine Formänderung ausführt oder nicht. Verstellt sich nämlich beispielsweise das Zellenrad 5 in Pfeilrichtung 24 nach Figur 2, dann wird diese Verstellbewegung über das Lager 10,11 und den Wellenstumpf 9 der Verschleißbuchse 12 mitgeteilt. Das Zellenrad 5 und die Verschleißbuchse 12 machen also genau synchrone Bewegungen in Verstellrichtung 24, wodurch die Verstellbewegung der Verschleißbuchse 12 von dem außen liegenden elastomeren Schwimm-Mantel 26 aufgefangen werden.

Das Verstellspiel 19 (Figur 1) dient hierbei zum Ausgleich des notwendigen Vertikalspiels der Verstellbuchse 12 im Bereich der Gehäusenut.

Um eine achsiale Verstellung der Verschleißbuchse 12 zu vermeiden, legt sich die Verschleißbuchse 12 hierbei an den Innenseiten des Seitendeckels 1 jeweils an.

Aus Figur 2 ergibt sich noch, daß das Gehäuse aus zwei hälftig geteilten Schalen besteht, nämlich aus einer oberen Gehäuseschale 2 und einer unteren Gehäuseschale 22. Es ergibt sich hierbei eine Trennfuge 20 in horizontaler Ebene.

In Figur 2 ist das Gehäuse mit seiner Gehäusebohrung 21 jedoch ohne eingesetztes Zellenrad 5 gezeichnet.

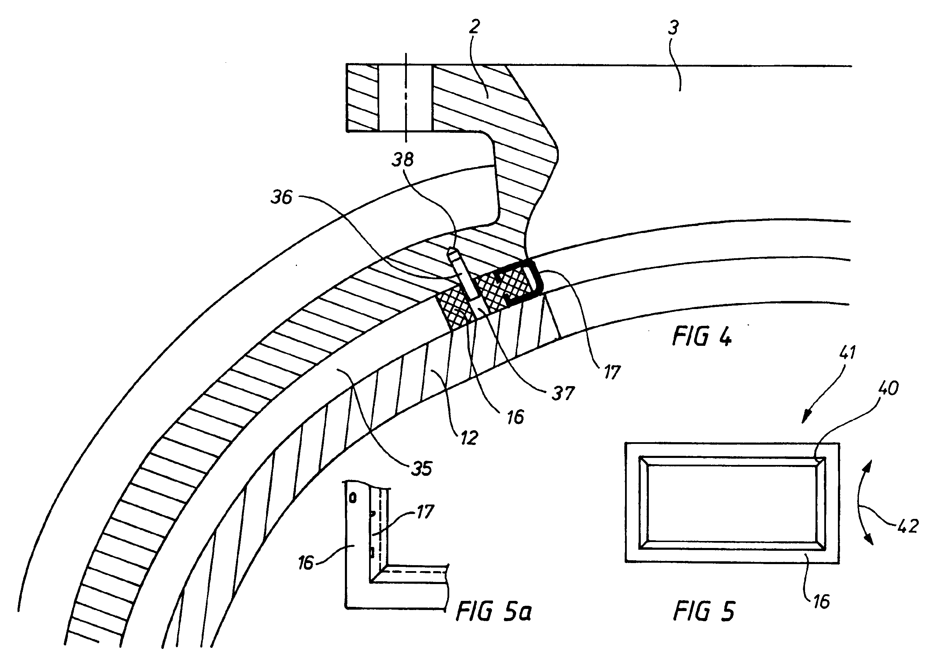

Die Figur 4 zeigt eine weitere Ausführungsform der vorliegenden Erfindung, aus der sich ergibt, daß der Elastomer-Mantel 26 nicht voll umfänglich vorhanden ist, sondern nach dem Ausführungsbeispiel gemäss Figur 4 durch einen Elastomer-Flansch 16 ersetzt ist.

Dieser Elastomer-Flansch 16 befindet sich also nur im Bereich der Auflagefläche 32 der Verschleißbuchse 12 gemäss Figur 3.

Dieser Elastomer-Flansch 16 bildet somit in der Draufsicht ein rechteckförmiges Teil, wobei an der Einlaufseite ein rechteckförmiges Teil und an der Auslaufseite ebenfalls ein rechteckförmiges Teil angeordnet ist. Beide Teile sind rahmenförmig ausgebildet. Die ungefähre Formgebung ergibt sich aus der Figur 5 bzw. Figur 5a.

Es handelt sich hierbei um ein Rahmenteil 41, welches in der Art eines Bilderrahmens zusammengefügt ist Auf der Innenseite befindet sich der Metallmantel 17 in Form beispielsweise eines Chrom-Nickel-Materials, welches klammerförmig im Profil in den rahmenförmig umlaufenden Elastomer-Flansch 16 eingehängt ist.

Der Metallmantel 17 ist an den Ecken über Gehrungsstösse 40 aneinandergefügt.

Aus dem Detail Figur 5a ergeben sich weitere Merkmale dieses Rahmenteils 41.

Aus Figur 5a ist erkennbar, daß auf das rahmenförmig umlaufende Kunststoffteil (Elastomer-Flansch 16) der Metallmantel 17 aufgeclipst ist und hierbei die Innenkanten des Elastomer-Flansches umgreift, wie dies im Profil in Figur 4 dargestellt ist. Zur Positionierung des Rahmenteils 41 am Gehäuse sind hierbei Positionierbolzen 37 vorgesehen, die in zugeordnete Bohrungen 37 einerseits des Elastomer-Flansches 16 eingreifen und andererseits in zugeordnete Bohrungen 38 an der Gehäuseseite. Hierdurch wird die Montage dieses Rahmenteils beim Zusammenfügen der äußeren Gehäuseschalen 2,22 erleichtert.

Durch den an der Einlaufseite und Auslaufseite angeordneten Metallmantel, der den Elastomer-Flansch 16 ringsum in diesen Bereichen schützt, wird gewährleistet, daß die Dichtung in diesem Bereich nicht verschleißen kann.

Der Metallmantel 17 hat jedoch ein derartiges Federvermögen in radialer Richtung des Zellenrades, so daß das geforderte Bewegungsspiel in den Pfeilrichtungen 24 noch aufrecht erhalten bleibt.

Die Befestigung des rahmenförmigen Metallmantels 17 mit dem rahmenförmigen, umlaufenden Elastomerflansch 16 erfolgt über Metallclipse.

Sobald das Rahmenteil 41 hergestellt ist, muß es noch der sphärischen Innenkrümmung der Gehäuseschalen 2,22 angepasst werden. Dies erfolgt durch Walzen des gesamten Rahmenteils 41 in Pfeilrichtung 42.

Durch die Verwendung eines Rahmenteils 41 mit einem Elastomer-Flansch 16 bildet sich somit ein Zwischenraum 35 zwischen der Verschleißbuchse 12 und der zugeordneten Gehäusewandung der Gehäuseschalen 2,22. Dieser Zwischenraum 35 kann mit beliebigen Isoliermaterialien gefüllt sein; er kann auch mit Luft oder mit einem Gas gefüllt sein.

Dieser Zwischenraum 35 wirkt somit geräuschdämmend und temperaturisolierend.

Die gleiche Wirkung hat im übrigen auch der vorher anhand der Figuren 1 bis 3 erwähnte Elastomer-Mantel 26, wenn auch in niedrigeren Temperaturbereichen.

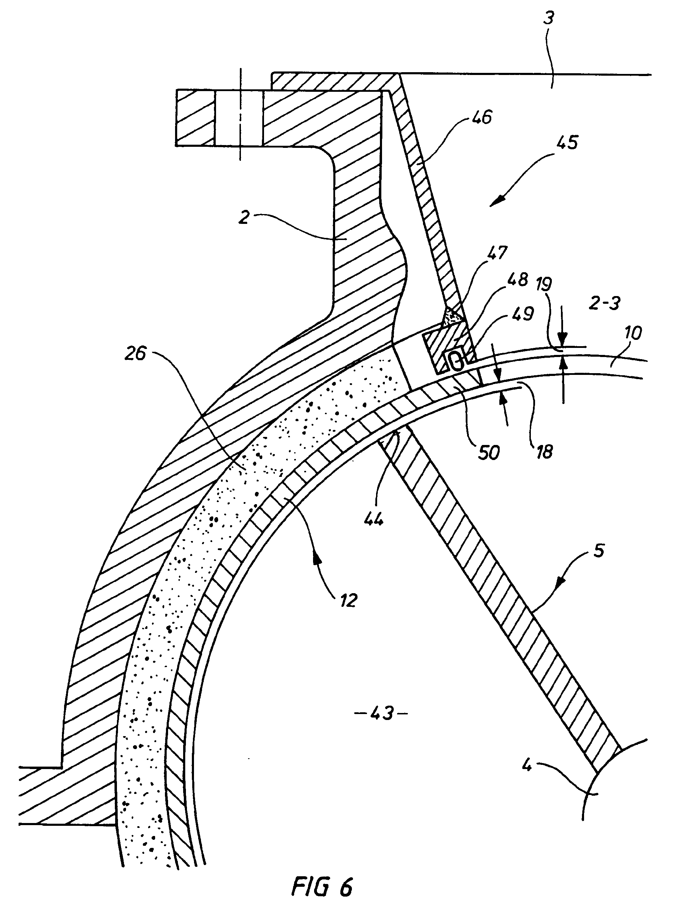

Die Figur 6 zeigt eine weitere Ausführungsform der vorliegenden Erfindung, die sich von den vorigen Ausführungsformen dadurch unterscheidet, daß im Bereich der Einlauf- und der Auslaufseite ebenfalls ein Verschleißschutz vorhanden ist.

Bei diesem Ausführungsbeispiel ist als Beispiel wieder ein vollumfänglich vorhandener Elastomer-Mantel 26 dargestellt, der genauso gut durch das Ausführungsbeispiel nach Figur 4, nämlich durch einen Elastomer-Flansch 16 ersetzt werden kann.

In Abweichung von den vorher beschriebenen Ausführungsbeispielen ist hier dargestellt, daß auch noch in der Einlaufseite (und auch in analoger Weise in der Auslaufsleite) ein Einsatzteil 45 vorhanden ist, welches im wesentlichen aus einem Einsatzflansch 46, z.B. aus einem Chrom-Nickel-Stahl besteht. Dieser Einsatzflansch 46 deckt somit vollständig die Gehäuseschalen gegenüber einem empfindlichen oder aggressiven Fördermedium ab, so daß es damit möglich ist, relativ billige Materialien für die Gehäuseschalen 2,23 z.B. Aluminiumguß- oder Grauguß zu verwenden und trotzdem im Bereich der gesamten Durchflußstrecke hochverschleißfeste, abriebfeste Materialien verwendet werden können.

Beim gezeigten Ausführungsbeispiel stösst der Einsatzflansch 46 über eine Schweiss-Stelle 47 mit einem Flansch 48 zusammen. In dem Flansch 48 ist eine Nut eingedreht, in welche ein O-Ring 49 eingelegt ist.

Damit stützt sich das gesamte Einsatzteil 45 an einem in Umfangsrichtung an der Verschleißbuchse 12 verlängerten Ansatz 50 ab, so daß eine ausgezeichnete Halterung des Einsatzteils 45 gegeben ist.

Anhand dieser Zeichnung können nochmals die physikalischen Gegebenheiten erläutert werden, wie sie anhand der vorher beschriebenen Ausführungsbeispiele bereits schon beschrieben wurden.

Der hier gezeigte Steg des Zellenrades 5 bildet zusammen mit zeichnerisch nicht näher dargestellten anderen Stegen jeweils eine Zellenradkammer 43. Die Oberkante 44 des Zellenrades bildet den vorher beschriebenen Minimalabstand 18 in Verbindung zur Innenwandung 23 der Verschleißbuchse 12.

Aufgrund der schwimmenden Lagerung von Verschleißbuchse 12 bleibt somit dieser Minimalabstand 18 stets aufrecht erhalten, unbhängig von Formänderungsspielen, welche das Zellenrad 5 ausführt.

## Patentansprüche

1. Gehäuse für eine Zellenradschleuse mit einem einen Einlaufschacht, eine Bohrung zur Aufnahme des Zellenrades und einen Auslaufschacht umfassenden Gehäusekörper und zwei die Bohrung stirnseitig verschließenden Lagerdeckeln, wobei in die Bohrung eine austauschbare zylindrische Büchse mit Durchbrechungen in der Höhe des Einlauf- und des Auslaufschachtes eingesetzt ist, die als Verschleißbuchse ausgebildet ist und aus mehreren zueinander symmetrischen Teilen besteht**, dadurch gekennzeichnet,** daß die Verschleißbuchse (12) aus zwei einteiligen Bauteilen besteht, die spiegelsymmetrisch zu einer Mittelquerebene durch die vertikale Schleusenmittelachse (31) sind und einen außerhalb der Durchbrechungen liegenden, geschlossenen Außenumfang aufweisen, und daß die Verschleißbuchse an ihrem so entstehenden Außenumfang mindestens teilweise von einem elastomeren Kunststoffkörper umgeben ist, der als Elastomerflansch (16) oder als Elastomermantel (26) ausgebildet ist, welcher die Verschleißbuchse (12) gegenüber der Gehäuseschale (2) schwimmend abstützt.

2. Gehäuse nach Anspruch 1, **dadurch**
**gekennzeichnet,** daß das Gehäuse aus zwei zueinander symmetrischen Gehäuseschalen (2,22) besteht, wobei die Trennfuge (20) auf horizontaler Ebene verläuft.

3. Gehäuse nach Anspruch 1, **dadurch**
**gekennzeichnet,** daß die Verschleißbuchse (12) nach Art einer schwimmenden Lagerung von einem elastomeren Kunststoffmantel (26) voll umfänglich umgeben ist, wobei der elastomere Kunststoffmantel (26) in der Formgebung den seitlichen Büchsenmänteln (28) der Verschleißbuchse (12) entspricht.

4. Gehäuse nach Anspruch 1, **dadurch**
**gekennzeichnet,** daß die Verschleißbuchse (12) nur an einigen Stützflächen schwimmend gegenüber der Gehäuseschale (2,22) gelagert ist, wobei die elastomere Lagerung an den Stützflächen flanschartig bzw. streifenförmig durch einen Elastomerflansch (16) ausgebildet ist (Figur 4).

5. Gehäuse nach Anspruch 1, **dadurch**
**gekennzeichnet,** daß die Verschleißbuchse (12) einen zylindrisch umlaufenden Ringflansch (25) aufweist, der an den Stirnflächen O-Ringe (13,14) aufweist und daß werkstoffeinstückig mit dem Ringflansch (25) ein seitlicher Büchsenmantel (28) vorgesehen ist, der Einschnitte aufweist, um den oberen Einlauf (29) und den unteren Auslauf (30) zu bilden und daß am Büchsenmantel (28) eine Auflagefläche (32) gebildet ist, welche den Elastomermantel (26) voll umfänglich oder streifenförmig trägt.

6. Gehäuse nach Anspruch 1, **dadurch**
**gekennzeichnet,** daß zur Verbindung der beiden Verschleißbuchsen (12) im Bereich ihrer einander zugewandten Stirnseiten Planflächen (52) ausgebildet sind, welche Stecklöcher (33) aufweisen, in welche jeweils ein Verbindungszapfen (34) eingreift.

7. Gehäuse nach Anspruch 1**, dadurch**
**gekennzeichnet,** daß die Stirnseiten des Elastomermantels (26), welche in den Bereich des Einlauftrichters (3) und des Auslauftrichters (51) ragen, armiert ausgebildet sind.

8. Gehäuse nach Anspruch 7, **dadurch**
**gekennzeichnet,** daß die Armierung in Form eines Kammerteils als Metallmantel (17) mit Federstahlcharakteristik ausgebildet ist.

9. Gehäuse nach Anspruch 4, **dadurch**
**gekennzeichnet,** daß der Elastomerflansch (16) in der Draufsicht rechteckförmig ausgebildet ist und hierbei ein Rahmenteil (41) ausbildet, wobei auf der Innenseite ein Metallmantel (17) Klammerförmig auf das Profil des Elastomerflansches (16) aufgeclipst ist (Figur 5).

10. Gehäuse nach Anspruch 4, **dadurch**
**gekennzeichnet,** daß zur Positionierung des Elastomerflansches (16) bzw. des Rahmenteils (41) Positionierbolzen (37) vorgesehen sind, welche ausgehend vom Elastomerflansch (16) in zugeordnete Bohrungen (38) an der Gehäuseseite eingreifen (Figur 4).

11. Gehäuse nach Anspruch 1, **dadurch**
**gekennzeichnet,** daß im Bereich der Einlauf- und Auslaufseite des Zellenrades (5) zur Abdeckung der Gehäuseschalen (2,22) ein Einsatzteil (45) als Verschleißschutz angeordnet ist.

## Claims

1. A housing for a bucket wheel sluice with a housing body comprising an inlet shaft, a bore to receive the bucket wheel and an outlet shaft and two bearing covers closing the bore on the front side, in which an exchangeable cylindrical bush, having perforations at the level of the inlet- and outlet shafts, is inserted into the bore, which bush is constructed as a wear bush and consists of a plurality of parts which are symmetrical to each other, characterised in that
the wear bush (12) consists of two integral components which are in mirror symmetry to a median transverse plane through the vertical central axis (31) of the sluice and have a closed outer circumference lying outside the perforations, and that the wear bush (12) is surrounded on its outer circumference, so formed, at least partially by an elastomeric plastics body, which is constructed as elastomer flange (16) or as elastomer casing (26), which supports the wear bush (12) is a floating manner with respect to the housing shell (2).

2. A housing according to Claim 1, characterised in that the housing consists of two housing shells (2, 22) which are symmetrical to each other, in which the separating joint (20) extends on a horizontal plane.

3. A housing according to Claim 1, characterised in that the wear bush (12) is surrounded over its entire circumference by an elastomeric plastics casing (26) in the manner of a floating bearing, in which the elastomeric plastics casing (26) corresponds in its shaping to the lateral bush casings (28) of the wear bush (12).

4. A housing according to Claim 1, characterised in that the wear bush (12) is mounted in a floating manner with respect to the housing shell (2, 22) only on some support faces, in which the elastomeric bearing on the support faces is constructed in the manner of a flange or in the shape of a strip by an elastomer flange (16) (Figure 4).

5. A housing according to Claim 1, characterised in that the wear bush (12) has an annular flange (25), running around it cylindrically, which has O rings (13, 14) on the front faces, and that a lateral bush casing (28) is provided, in one piece of material with the annular flange (25), which bush casing (28) has indentations to form the upper inlet (29) and the lower outlet (30), and that a bearing surface (32) is formed on the bush casing (28), which carries the elastomer casing (26) over its entire circumference or in strip form.

6. A housing according to Claim 1, characterised in that for the connection of the two wear bushes (12) in the region of their front faces, which are brought to bear on each other, plane surfaces (52) are constructed which have plug holes (33), in which in each case a connecting pin (34) engages.

7. A housing according to Claim 1, characterised in that the front faces of the elastomer casing (26), which project into the region of the inlet funnel (3) and of the outlet funnel (51), are constructed so as to be reinforced.

8. A housing according to Claim 7, characterised in that the reinforcement is constructed in the form of a clamp piece as metal casing (17) with the characteristic of spring steel.

9. A housing according to Claim 4, characterised in that the elastomer flange (16) is constructed so as to be rectangular in plan and hereby forms a frame part (41), in which on the inner side a metal casing (17) is clipped in the form of a clamp onto the profile of the elastomer flange (16) (Figure 5).

10. A housing according to Claim 4, characterised in that for the positioning of the elastomer flange (16) or of the frame part (41), positioning bolts (37) are provided which, starting from the elastomer flange (16) engage in associated bores (38) on the housing side (Figure 4).

11. A housing according to Claim 1, characterised in that in the region of the inlet and outlet sides of the bucket wheel (5) an insert part (45) is arranged as wear protection to cover the housing shells (2, 22).

## Revendications

1. Carter destiné à un sas à roue cellulaire comportant une trémie d'alimentation, un alésage pour le logement de la roue cellulaire, un corps de carter comprenant une trémie d'évacuation et deux couvercles de palier obturant l'alésage sur les faces latérales, alésage dans lequel est insérée une douille cylindrique interchangeable conçue en tant que douille d'usure composée de plusieurs éléments symétriques les uns par rapport aux autres et comportant des découpes au niveau de la trémie d'alimentation et de la trémie d'évacuation, caractérisé en ce que la douille d'usure (12) est composée de deux éléments de construction d'une seule pièce, lesquels sont symétriques par rapport à un plan central vertical passant par l'axe central (31) du sas et comportent une surface circonférentielle extérieure fermée située hors des découpes, et en ce que la douille d'usure, au niveau de sa surface circonférentielle ainsi formée, est entourée au moins partiellement d'un corps en matière synthétique élastomère, réalisé sous la forme d'une collerette en élastomère (16) ou d'une gaine en élastomère (26) constituant un support élastique de la douille d'usure (12) par rapport à la coquille du carter (2).

2. Carter selon la revendication 1, caractérisé en ce que le carter est composé de deux coquilles de carter (2, 22), le joint de séparation (20) se trouvant dans un plan horizontal.

3. Carter selon la revendication 1, caractérisé en ce que la douille d'usure (12) est entourée sur toute sa circonférence par une gaine en matière synthétique élastomère (26) constituant une sorte de logement élastique, la forme de cette gaine en matière synthétique élastomère (26) correspondant à celle des enveloppes latérales (28) de la douille d'usure (12).

4. Carter selon la revendication 1, caractérisé en ce que la douille d'usure (12) n'est logée élastiquement dans la coquille de carter (2, 22) que sur des surfaces d'appui partielles, le support élastomère aux surfaces d'appui étant réalisé sous forme de bride ou sous forme de bande par une collerette en élastomère (16) (figure 4).

5. Carter selon la revendication 1, caractérisé en ce que la douille d'usure (12) est entourée d'une bride annulaire cylindrique (25) dont les surfaces latérales comportent des joints toriques (13, 14), et en ce qu'il est prévu une enveloppe de douille latérale (28) constituant une seule pièce avec la bride annulaire (25), cette enveloppe comportant des découpes destinées à constituer l'alimentation supérieure (29) et l'évacuation inférieure (30), et en ce qu'il est formé une surface d'appui (32) sur l'enveloppe de douille (28) supportant la gaine en élastomère (26) sur toute sa circonférence ou sous forme de bandes.

6. Carter selon la revendication 1, caractérisé en ce que, afin de relier les deux douilles d'usure (12) entre elles, celles-ci comportent sur leurs parties latérales se faisant face des surfaces planes (52) équipées de trous (33), dans lesquels s'insère respectivement une goupille de liaison (34).

7. Carter selon la revendication 1, caractérisé en ce que les faces latérales de la gaine en élastomère (26) qui bordent la zone de la trémie d'alimentation (3) et de la trémie d'évacuation (51) sont armées.

8. Carter selon la revendication 7, caractérisé en ce que l'armature est réalisée sous forme d'une enveloppe métallique (17) agrafée ayant les caractéristiques d'un acier à ressorts.

9. Carter selon la revendication 4, caractérisé en ce que la collerette en élastomère (16) est de forme rectangulaire vue du dessus, constituant ainsi un élément de cadre (41), sur la face intérieure duquel une enveloppe métallique (17) est clipsée sous forme d'agrafe sur le profil de la collerette en élastomère (16) (figure 5).

10. Carter selon la revendication 4, caractérisé en ce que pour le positionnement de la collerette en élastomère (16) et/ou de l'élément de cadre (41), il est prévu des chevilles de positionnement (37) qui s'insèrent à travers la collerette en élastomère (16) dans des perçages associés (38) pratiqués côté carter (figure 4).

11. Carter selon la revendication 1, caractérisé en ce que, dans la zone d'alimentation et d'évacuation de la roue cellulaire (5), il est prévu une pièce d'insertion (45) qui recouvre les coquilles de carter (2, 22) et assure la protection contre l'usure.
